# EUROPEAN PATENT APPLICATION

(11) **EP 2 722 848 A1**
(43) Date of publication of application: **23.04.2014**
(21) Application number: 13188565.9
(22) Date of filing: 14.10.2013
(51) Int. Cl.: G11B 20/12, H04N 21/2365

(54) **Blu-ray disc player and method of displaying subtitles in the blu-ray disc player**

(30) Priority: 18.10.2012 KR 20120116137
(71) Applicant: Samsung Electronics Co., Ltd, Gyeonggi-do 443-742 (KR)
(72) Inventor: Bae, Jae-min, Gyeonggi-do (KR); Yun, Jong-hee, Gyeonggi-do (KR)
(74) Representative: Walaski, Jan Filip

(57) **Abstract**

A Blu-ray disc player includes a mounter, a buffer configured to load a Blu-ray disc, a controller configured to load a file recorded on the Blu-ray disc in the buffer if the Blu-ray disc is mounted on the mounter, and configured to load subtitle data and video data, wherein the subtitle data and the video data are separated into a plurality of fields and recorded in the file on the Blu-ray disc, a filter configured to detect the video data and the subtitle data from the file loaded in the buffer; a video processor configured to decode the video data and create one or more video frames, a data processor configured to decode the subtitle data and create one or more subtitles, a mixer configured to add the one or more subtitles to the video frames, and a display configured to display the one or more video frames to which the one or more subtitles have been added.

## Description

The present invention relates to a Blu-ray disc, a Blu-ray disc player, and a method of displaying subtitles in the Blu-ray disc player, and more particularly, to a Blu-ray disc, a Blu-ray disc player, and a method of displaying subtitles in the Blu-ray disc player, capable of decoding a text subtitle file in an In-Multiplex (In-Mux) fashion.

With the development of electronic technologies, devices for playing data from various kinds of recording media have been developed and supplied. One type of recording medium is an optical disc. An optical disc is a storage medium for reading information using reflection of light.

A Blu-ray disc (referred to as a "BD" herein), which is a third (3rd) generation standard for optical discs, is an optical recording type storage medium configured to store digital data for high-definition (HD) video.

The BD player market has continued to grow due to the popularization of the BD. The BD has grown in popularity over the HD-DVD disc. The HD-DVD disc was a competing standard for the next generation DVD standard in early 2008. The BD is considered as the next generation storage medium.

Various types of data can be stored in a BD, and the stored data can be played by a BD player. If a person wants to store content composed of video and audio data in a BD and sell the BD in different countries, subtitles in various languages corresponding to the individual countries are needed so that a user can select his or her desired subtitles to watch the contents. Also, technologies for playing subtitles synchronized with the video streams that are played are required.

Conventional BD movies have used a text subtitle structure. In a text subtitle structure, text subtitle data is configured as a stream file separate from Moving Picture Experts Group (MPEG) streams storing information of video, audio, etc. Also, a file is provided corresponding to one language (for example, English, Korean, etc.).

Accordingly, in order to display text subtitles on a screen, a subtitle file is pre-loaded and decoded before MPEG streams (video and audio streams) are played so that text subtitles are displayed in synchronization with the MPEG streams. The subtitle file is provided as a separate file from the MPEG streams, and the streams of the subtitle file that is decoded upon playing are called Out-Of-Multiplex (Out-Of-Mux) streams.

According to the subtitle play method based on the Out-Of-Mux stream structure using text subtitles, text subtitles should be loaded before MPEG streams are played. Therefore, a separate pre-loading buffer is needed, which can consequently result in lowered loading speed. Also, when a user changes subtitles while a movie is being played, the header of a player needs to move, and in some cases, a leak of a video buffer may occur.

Meanwhile, the BD standard provides a method of using presentation graphics (PG) as another method for representing subtitles instead of the text subtitle structure.

This method does not have the problem of the text subtitle structure since it does not need a separate subtitle file; however, PG, which is subtitles represented in the form of images, has a large data size compared to text subtitles. Furthermore, as the size of a display increases, the sizes of images also increase, resulting in an increase in size of data.

Accordingly, a method which addresses at least the above problems is needed.

Exemplary embodiments address the above disadvantages and other disadvantages not described above. Also, the exemplary embodiments are not required to overcome the disadvantages described above, and an exemplary embodiment may not overcome any of the problems described above.

The exemplary embodiments provide a Blu-ray disc, a Blu-ray disc player, and a method of displaying subtitles in the Blu-ray disc player, capable of reducing a loading time due to unnecessary operation of the Blu-ray disc player and capable of reducing a waste of resources by providing a method of providing text subtitles in an In-Mux fashion, instead of an Out-Of-Mux stream fashion.

A Blu-ray disc player according to an exemplary embodiment includes a mounter, a buffer configured to load a Blu-ray disc, a controller configured to load a file recorded on the Blu-ray disc in the buffer if the Blu-ray disc is mounted on the mounter, and configured to load subtitle data and video data, wherein the subtitle data and the video data are separated into a plurality of fields and recorded in the file on the Blu-ray disc, a filter configured to detect the video data and the subtitle data from the file loaded in the buffer, a video processor configured to decode the video data and create one or more video frames, a data processor configured to decode the subtitle data and create one or more subtitles, a mixer configured to add the one or more subtitles to the one or more video frames, and a display configured to display the one or more video frames to which the one or more subtitles have been added.

The subtitle data may include a subtitle style segment and a subtitle data segment.

The subtitle data may be subtitle data for a plurality of different languages, and the data processor may create the subtitles using subtitle data corresponding to a set language among the plurality of different languages.

The Blu-ray disc player may further include a font buffer, and the file further may include a data field in which font data is recorded, the filter may detect the font data from the file and buffers the font data in the font buffer, and the data processor may create the one or more subtitles with a font corresponding to the font data.

The Blu-ray disc player may further include a font pre-loading buffer, and the Blu-ray disc may store a font data file separately from the file, the controller may load the font data file in the font pre-loading buffer and detect font data from the font data file, and outputs the font data to the data processor, and the data processor may create the one or more subtitles with a font corresponding to the font data of the font data file.

The controller may control the video processor and the data processor to create one or more video frames and one or more subtitles, wherein the one or more video frames and the one or more subtitles are synchronized with each other based on a time stamp of the video data and a time stamp of the subtitle data.

The subtitle data and the video data may be recorded in the file in units of packets and each of the units of packets have different packet identifiers (PIDs), and the filter may detect the video data and the subtitle data based on the PID of each packet in the file, and provide the video data and the subtitle data to the video processor and the data processor, respectively.

The subtitle data may be compressed text data, and the data processor may decompress the subtitle data to decode the subtitle data.

A method of displaying subtitles in a Blu-ray disc player according to an exemplary embodiment includes loading a file recorded on a Blu-ray disc if the Blu-ray disc is mounted, and loading subtitle data and video data each being separated into a plurality of fields and are recorded in the file on the Blu-ray disc, detecting the video data and the subtitle data from the loaded file, decoding the video data to create one or more video frames, decoding the subtitle data to create one or more subtitles, adding the one or more subtitles to the one or more video frames, and displaying the one or more video frames to which the one or more subtitles have been added.

The subtitle data may include a subtitle style segment and a subtitle data segment.

The subtitle data may be subtitle data for a plurality of different languages, and the creating the subtitles may include creating the one or more subtitles using subtitle data corresponding to a set language among the plurality of different languages.

The file may further include a data field in which font data is recorded, the detecting the video data and the subtitle data may include detecting the font data from the file, and in the creating the subtitles, the subtitles may be created with a font corresponding to the detected font data.

The Blu-ray disc may store a font data file separately from the file, the loading the file may include loading the font data file in a font pre-loading buffer, the detecting the video data and the subtitle data may include detecting font data from the font data file, and in the creating the subtitles, the subtitles may be created with a font corresponding to the font data.

The video frames and the subtitles may be synchronized based on a time stamp of the video data and a time stamp of the subtitle data.

The subtitle data and the video data may be recorded in the file in units of packets with different packet identifiers (PIDs), and in the detecting of the video data and the subtitle data, the video data and the subtitle data may be detected based on the PID of each packet.

The subtitle data may be compressed text data, and the creating of the subtitles may further include decompressing the subtitle data to decode the subtitle data.

A Blu-ray disc according to an exemplary embodiment includes a file storage area in which subtitle data, and video data are each segmented into a plurality of fields and are recorded in the form of a file, the subtitle data is segmented according to a subtitle display, the video data is segmented in units of video frames for which a subtitle segmented according to the subtitle display is displayed in common, and the subtitle data includes a subtitle style segment and a subtitle data segment.

The file may further include a data field in which font data is recorded.

As described above, according to the various exemplary embodiments, it is possible to reduce a loading time due to unnecessary operation of a Blu-ray disc player, to reduce a waste of resources, and to provide high-quality text subtitles while using a small capacity.

The above and/or other aspects will be more apparent by describing certain exemplary embodiments with reference to the accompanying drawings, in which:
FIG. 1 is a block diagram showing the configuration of a Blu-ray disc player according to an exemplary embodiment;
FIG. 2 is a view for explaining a process in which data recorded in a Blu-ray disc is played in the Blu-ray disc player illustrated in FIG. 1;
FIGS. 3 and 4 show the structures of files recorded in a Blu-ray disc according to an exemplary embodiment;
FIG. 5 shows a packet structure of video data or subtitle data;
FIG. 6 is a table showing allocation of packet identifiers (PIDs) defined in a Blu-ray disc standard;
FIG. 7 shows an MPEG stream having a plurality of pieces of subtitle data, according to an exemplary embodiment;
FIG. 8 is a block diagram showing the configuration of a Blu-ray disc player including a font buffer, according to another exemplary embodiment;
FIG. 9 is a block diagram showing the configuration of a Blu-ray disc player including a font pre-loading buffer, according to another exemplary embodiment; and
FIG. 10 is a flowchart showing a method of displaying subtitles in a Blu-ray disc player, according to an exemplary embodiment.

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

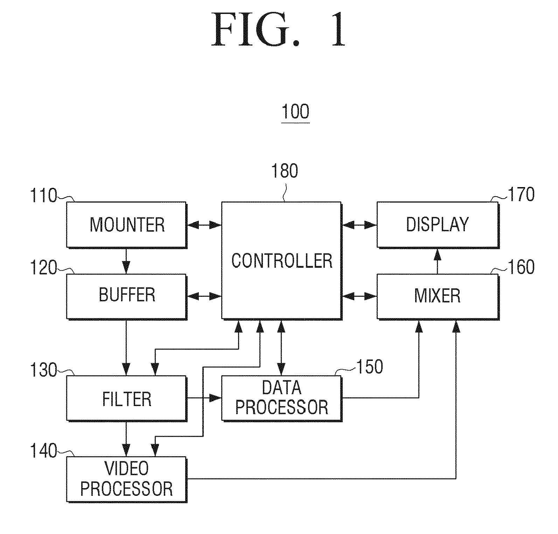

FIG. 1 is a block diagram showing the configuration of a Blu-ray disc player 100 according to an exemplary embodiment. Referring to FIG. 1, the Blu-ray disc player 100 includes a mounter 110, a buffer 120, a filter 130, a video processor 140, a data processor 150, a mixer 160, a display 170, and a controller 180.

The mounter 110 is a component upon which a Blu-ray disc is mounted. The mounter 110 may include a tray, an optical pick-up, a loading motor, a spindle motor, a sled motor, etc. In detail, if a Blu-ray disc is mounted on the tray of the mounter 110, the mounter 110 may automatically drive the spindle motor to move the optical pick-up using the sled motor while rotating the Blu-ray disc, thus accessing the Blu-ray disc.

The buffer 120 is a component for loading the Blu-ray disc. A buffer is a memory area for temporarily storing data while data is transferred from one place to another place between hardware devices with different operating speeds. The buffer 120 loads a file recorded in the Blu-ray disc, and temporarily stores the file for processing.

The filter 130 detects video data and subtitle data from the file loaded in the buffer. In detail, the filter 130 may perform a demultiplexing or demuxing function of transferring each data packet to the video processor 140 or the data processor 150 according to a packet identifier (PID) of the data packet. The filter 130 may filter all packets, such as an interactive graphics (IG) stream, a presentation graphics (PG) stream, and an audio stream, which are classified according to their PIDs, and transfer the filtered packets to the respective decoders or processors, which are not shown in FIG. 1.

The video processor 140 decodes the video data detected by the filter 130 to create video frames, and the data processor 150 decodes the subtitle data detected by the filter 130 to create subtitles. Subtitles include, for example, descriptions of statements made by characters in a movie or show and descriptions of background music.

The mixer 160 functions to mix video frames, audio, subtitles, etc. In detail, the mixer 160 may add the subtitles created by the data processor 150 to the video frames created by the video processor 140.

The display 170 may display various screens. In detail, the display 170 may display video frames to which subtitles have been added. For this, the display 170 may be implemented as a liquid crystal display (LCD) including a display panel and a backlight unit, or as another type of display, such as an organic light-emitting diode (OLED), a plasma display panel (PDP), etc. The display 170 can include a subtitle display for displaying subtitles.

Also, audio data may be transferred from the filter 130 to an audio data processor (not shown) to be processed by the audio data processor, and the audio may be mixed with various kinds of sound.

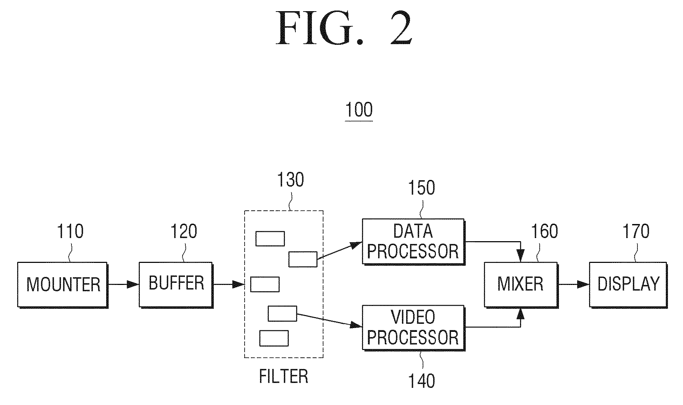

The controller 180 may control the operation of the entire Blu-ray disc player 100. In detail, the controller 180 controls all processes in which data recorded in the Blu-ray disc is played in the Blu-ray disc player 100. Processes are shown in FIG. 2. Hereinafter, the operation of the controller 180 will be described with reference to FIG. 2.

Referring to FIG. 2, if a Blu-ray disc is mounted on the mounter 110, the controller 180 loads a file recorded in the Blu-ray disc in the buffer 120.

In the Blu-ray disc, subtitle data and video data may each be segmented into a plurality of fields and may be recorded in the form of a file. Here, the subtitle data may be segmented into a plurality of fields according to a subtitle display. Also, the video data may be segmented in units of video frames for which a subtitle segmented according to the subtitle display is displayed in common. A subtitle display is a location on a display where the subtitles are displayed.

For example, there may be a case that video contents configured such that a subtitle "ABCDE" is displayed for first, second, and third video frames, no subtitle is displayed for fourth and fifth video frames, and a subtitle "FGHIJKLMN" is displayed for sixth and seventh video frames. In such a situation, a file including a first video field in which video data of the first, second, and third video frames is recorded, a first subtitle field in which subtitle data of the subtitle "ABCDE" is recorded, a second video field in which video data of the fourth and fifth video frames is recorded, a third video field in which video data of sixth and seventh video frames is recorded, a second subtitle field in which subtitle data of the subtitle "FGHIJKLMN" is recorded, etc. may be stored in a Blu-ray disc. In this case, the first video field and the first subtitle field may be successively aligned, the second video field may be separately aligned, and the second video field and the second subtitle field may be also successively aligned.

With regard to the recording order of video data and subtitle data, since a content production company that produces Blu-ray discs can align data, such as video, audio, and subtitles, at proper locations taking into account buffering and a bitrate defined in the Blu-ray disc specification, the alignment order of the video data and subtitle data is not limited to the above-described example.

The controller 180 controls the Blu-ray disc player 100 such that the filter 130 detects the video data and the subtitle data from the file loaded in the buffer 120.

Successively, the controller 180 controls the Blu-ray disc player 100 such that the video processor 140 decodes the video data to create video frames, the data processor 150 decodes the subtitle data to create subtitles, and the mixer 160 adds the subtitles to the video frames.

Also, the controller 180 plays data recorded in the Blu-ray disc on the display 170 by controlling the Blu-ray disc player 100 such that the video frames to which the subtitles have been added are displayed on the display 170.

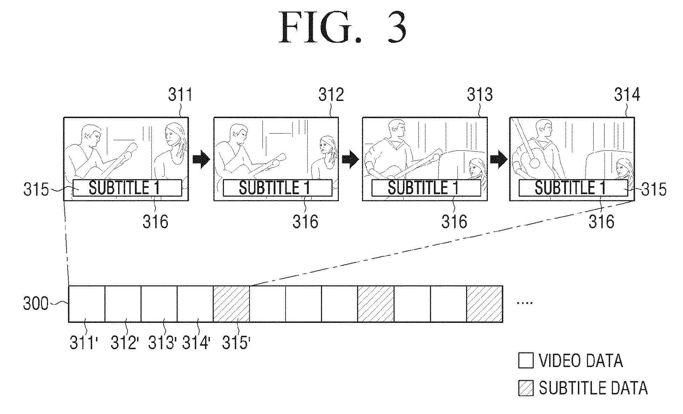

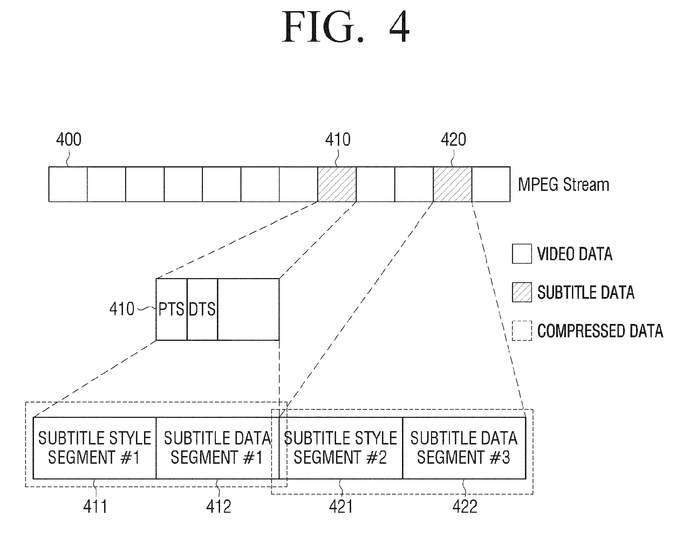

FIGS. 3 and 4 show examples of file structures recorded in a Blu-ray disc. A Blu-ray disc can store various types of data, and a Blu-ray disc according to an exemplary embodiment may include a file storage area in which a file including video data and subtitle data is stored.

Referring to FIG. 3, an MPEG stream file 300 recorded in the Blu-ray disc may be a file configured such that subtitle data 315' segmented according to a subtitle display 316 and video data 311' through 314', of at least one video frame for which the same subtitle data is displayed in common, are recorded in a predetermined alignment order.

For example, video frames 311 through 314 of a video file (a movie) and subtitle data representing a subtitle 315 that is displayed in common for the video frames 311 through 314 may be recorded in the form of a file in a Blu-ray disc.

Referring to FIG. 3, the video frames 311 through 314 may be successively changing scenes of the movie, and the changing scenes (the video frames 311 through 314) may correspond to the same subtitle 315.

Also, when such video frames and subtitles are recorded in a Blu-ray disc, the subtitle 315 may be recorded in the form of the subtitle data 315', and the video frames 311 through 314, for which the same subtitle is commonly displayed may be recorded in the form of the video data 311' through 314'. In this way, video data and subtitle data may be alternately recorded throughout the movie. FIG. 3 relates to the case in which video data and subtitle data are alternately aligned in the order of video data and then subtitle data. However, as described above, video data and subtitle data may be alternately aligned in the order of subtitle data and then video data, or in some cases, there may exist a field in which subtitle data or video data may be successively aligned.

In the exemplary embodiment of Fig. 3, the subtitle data 315' means text subtitle data, and does not mean PG subtitle data, which is in the form of an image.

In order to distinguish the MPEG stream file 300 recorded in the above-described structure from an MPEG stream according to a conventional BD standard, the file 300 will be hereinafter referred to as an "MPEG stream according to the exemplary embodiment".

The MPEG stream according to the exemplary embodiment may further include audio data, PG, IG, etc., other than video data and subtitle data.

In this specification, video data and subtitle data may be in the form of packets, and the MPEG stream file 300 according to the exemplary embodiment may be a group of such packets, which will be described in detail later.

The text subtitle data according to the conventional Blu-ray disc standard is configured as a separate stream file from an MPEG stream that stores information of video, audio, etc., In order to display text subtitles on a screen, a subtitle file has to be pre-loaded and stored in a pre-loading buffer, then decoded before an MPEG stream is played, and displayed on a screen in synchronization with the MPEG stream.

In the conventional Blue-ray disc standard, the stream of the subtitle file that exists as a separate file from the MPEG stream and is decoded upon playing is called an Out-Of-Mux stream. I In the subtitle play method based on the Out-Of-Mux stream structure using text subtitles, since text subtitles have to be pre-loaded before an MPEG stream is played, a separate pre-loading buffer is needed, which becomes a factor that lowers a loading speed.

However, in the MPEG stream structure according to the exemplary embodiment, as described above, a text subtitle data stream is included and recorded in an existing MPEG stream according to a predetermined alignment order, instead of the text subtitle data stream existing as a separate file. That is, a file configured in the In-Mux fashion, in which all subtitles are segmented into a plurality of pieces of subtitle data according to a subtitle display, and video data, of at least one video frame for which each piece of subtitle data is displayed, is combined with the subtitle data according to a predetermined alignment order. Therefore, the video data and the subtitle data are recorded together and recorded on a Blu-ray disc. In other words, in the MPEG stream structure according to the exemplary embodiment, text subtitles are provided in the In-Mux fashion.

Accordingly, a pre-loading buffer for pre-loading a subtitle file is not needed, and wasting of resources, such as memory, may be reduced.

FIG. 4 is a view for explaining another exemplary embodiment relating to a subtitle data structure in an MPEG stream file 400 according to the exemplary embodiment. In FIG. 4, reference numbers 410 and 420 represent subtitle data.

Referring to FIG. 4, the subtitle data 410 may include a first subtitle style segment 411 and a first subtitle data segment 412. Likewise, the subtitle data 420 may include a second subtitle style segment 421 and a third subtitle data segment 422.

A subtitle style segment is a field containing all information about the corresponding subtitle, such as information about the font of the subtitle (e.g., font type, font size, font color), location information of the subtitle (e.g., location of the subtitle on the display), etc., A subtitle data segment is a field containing data (characters) of the corresponding subtitle.

In the text subtitle structure according to the Blu-ray disc standard, a subtitle style segment is called a dialog style segment (DSS). Since text subtitles according to the standard exist as a separate subtitle file, as described above, a DSS exists in only the initial part of the entire text subtitle file, and the DSS information is loaded in a pre-loading buffer when the text subtitles are pre-loaded before a movie is played, and decides the style of all of the subtitles.

However, since the MPEG stream structure according to the exemplary embodiment has a structure in which text subtitle data and video data are recorded as a single stream according to a predetermined alignment order, the subtitle style segment 411 and the subtitle style segment 421 corresponding to the DSS of the conventional text subtitles exist for the respective pieces of subtitle data 410 and subtitle data 420, and are loaded when the individual pieces of subtitle data 410 and subtitle data 420 are decoded, to decide the style (for example, a font, a display location, etc.) of subtitles.

Meanwhile, since subtitles have to be displayed on a screen synchronized with video frames, according to an exemplary embodiment, the controller 180 of the Blu-ray disc player 100 may control the video processor 140 and the data processor 150 to create video frames and subtitles synchronized based on the time stamps of video data and the time stamps of subtitle data.

A time stamp is information indicating a specific time. According to the Blu-ray disc standard, the kinds of time stamps that are used in an MPEG stream include a decoding time stamp (DTS) and a presentation time stamp (PTS). The DTS includes information regarding a time at which data has to be decoded, and the PTS includes information regarding a time at which decoded data has to be displayed on a screen.

In the MPEG stream according to the exemplary embodiment, video data and subtitle data are recorded according to a predetermined alignment order, and a DTS and a PTS exist for each piece of subtitle data. Referring to FIG. 4, the subtitle data 410 includes a DTS and a PTS. Meanwhile, although not shown in the drawing, video data also includes a DTS and a PTS according to the Blu-ray disc standard.

Accordingly, after the video data and subtitle data detected by the filter 130 are respectively transferred to the video processor 140 and the data processor 150, the Blu-ray disc player 100 may create video frames and subtitles decoded and synchronized at the respective DTS times of the video data and subtitle data. Thereafter, the video frames and the subtitles are synchronized through the PTS and then displayed on a screen.

In the Blu-ray disc standard, text subtitles and PG are provided in the form of subtitles. The text subtitles are subtitles recorded in the form of text, and the PG is subtitles recorded in the form of images.

The subtitle data according to the exemplary embodiment is text subtitle data, and may be compressed by various algorithms. It is seen in FIG. 4 that the subtitle data 410 and the subtitle data 420 consisting of the subtitle style segment 411 and the subtitle segment 421 and the subtitle data segment 412 and the subtitle data segment 422, respectively, can be compressed. At this time, a zip algorithm may be used as a compression algorithm, but the compression algorithm is not limited to a zip algorithm.

The compressed and recorded subtitle data should be decompressed when the Blu-ray disc is played, and accordingly, the controller 180 of the Blu-ray disc player 100 may control the data processor 150 to decompress the compressed subtitle data to decode it. As described above, by compressing subtitle data, recording the compressed subtitle data in a Blu-ray disc, and decompressing the compressed subtitle data upon playing to decode the subtitle data, it is possible to record the same size subtitle data file using a smaller capacity in a Blu-ray disc.

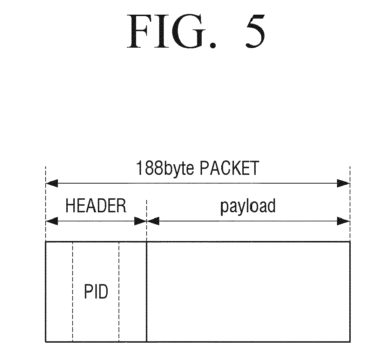

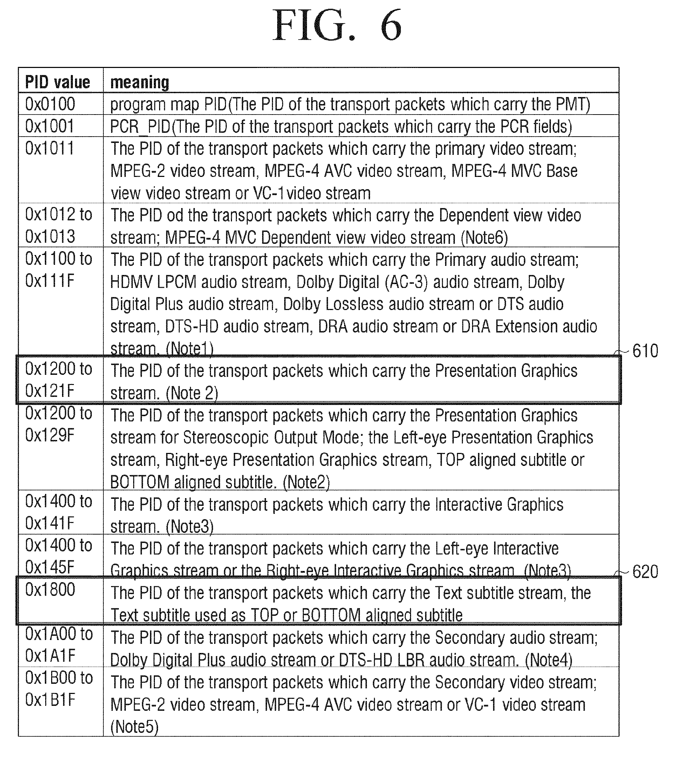

FIGS. 5 and 6 are views for explaining a method in which the MPEG stream file 300 and the MPEG stream file 400 described above with reference to FIGS. 3 and 4 are detected as video data and subtitle data by the filter 130.

According to an exemplary embodiment, the video data and the subtitle data described above with reference to FIGS. 3 and 4 may be recorded in an MPEG stream file in units of packets with different PIDs. The filter 130 may detect the video data and the subtitle data based on the PID of each packet recorded in the MPEG stream file, and provide the video data and the subtitle data to the video processor 140 and the data processor 150, respectively (see FIG. 2).

FIG. 5 shows a packet (hereinafter referred to as a "data packet") structure of video data or subtitle data. Referring to FIG. 5, the data packet is divided into a header part and a payload part, and has a size of a total of 188 bytes. The header part includes a PID indicating information about the kind of data the corresponding packet contains, and different PIDs may be allocated based on the various kinds of data packets, as shown in FIG. 6.

FIG. 6 is a table showing the allocation of PID values defined in the Blu-ray disc standard. Referring to FIG. 6, the PIDs of packets for PG subtitle data have values from 0x1200 to 0x121F (610), and the PID of packets for text subtitle data has a value of 0x1800 (620). Also, it is seen that specific PID values are allocated with respect to the packets of various data streams, such as a video stream, an audio stream, an IG stream, etc.

According to the Blu-ray disc standard, text subtitles recorded in a Blu-ray disc are allocated a PID value (0x1800) indicating that the corresponding packets are text subtitles since the text subtitles exist as a single file separately from an MPEG stream. Packets regarding PG subtitle data are allocated a total of 32 PID values from 0x1200 to 0x121F in order to support subtitles for 32 different languages.

The subtitle data (for example subtitle data 315' of FIG. 3, and subtitle data 410 and subtitle data 420 of FIG. 4) according to the exemplary embodiment is, as described above with reference to FIGS. 3 and 4, recorded together with video data according to a predetermined alignment order and included in an MPEG stream, unlike text subtitles based on the Blu-ray disc standard, which exist as a separate file from a video stream, although the subtitle data according to the exemplary embodiment is text type subtitles.

Therefore, the subtitle data according to the exemplary embodiment is distinguished from PG in the form of images in that the subtitle data is a text type Also, the subtitle data is different from text subtitles based on the Blu-ray disc standard, which exist as a separate file, since the subtitle data is included in an MPEG stream (that is, the subtitle data is provided in the In-Mux fashion).

Accordingly, in order to detect subtitle data packets included in an MPEG stream based on PIDs and transfer the subtitle data packets to the data processor 150, each subtitle data packet needs to be allocated a separate PID.

For example, referring to FIG. 6, since PG packets are allocated PIDs from 0x1200 to 0x121F, the following 32 PIDs from 0x12A0 to 0x12BF are allocated as PID values for subtitle data packets according to the exemplary embodiment in order to support subtitles for 32 different languages. However, a method of allocating PIDs is not limited to the above example.

Consequently, according to an exemplary embodiment, a file recorded in a Blu-ray disc may be in the form of a file in which subtitle data and video data are each segmented into a plurality of fields, and each of the video data and the subtitle data may be recorded in units of packets to which different PIDs have been allocated.

Referring again to FIG. 1, if a Blu-ray disc is mounted on the mounter 110 of the Blu-ray disc player 100, the controller 180 may load a file with the above-described structure in the buffer 120, and control the filter 130 to detect the file loaded in the buffer 120 in units of packets according to PIDs. The controller 180 can provide the detected video data to the video processor 140 and provide the detected subtitle data to the data processor 150 so that the video data and the subtitle data are respectively processed by the video processor 140 and the data processor 150.

Although not shown in the drawings, a font data file regarding the font of the subtitles may also be allocated a separate PID, which is detected by the filter 130, and processed by the data processor 150.

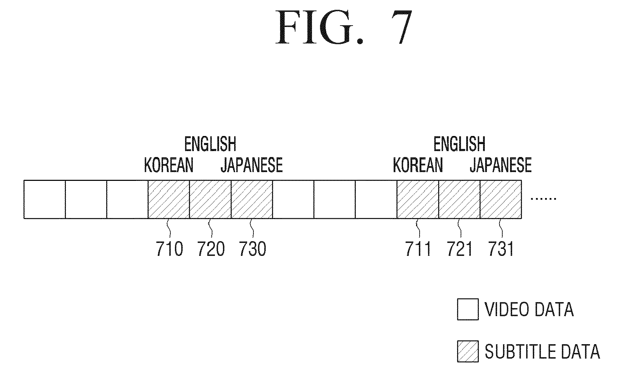

FIG. 7 is a view for explaining an example in which subtitle data for a plurality of different languages is included in an MPEG stream according to the exemplary embodiment. The above description has been given under an assumption that subtitle data has been created in one Korean, English, and Japanese, however, the subtitle data may be created in a plurality of other different languages.

Referring to FIG. 7, the subtitle data is configured in three languages: Korean, English, and Japanese. Subtitle data 710 and subtitle data 711 is subtitle data for the Korean language, subtitle data 720 and subtitle 721 is subtitle data for the English language, and subtitle data 730 and subtitle 731 is subtitle data for the Japanese language.

If a user sets a specific language among a plurality of languages for subtitles, the data processor 150 of the Blu-ray disc player 100 (see FIG. 1) may create subtitles using subtitle data corresponding to the language set by the user.

Subtitle data may be allocated a separate PID for each language. In detail, like the above-described example, 32 values from 0x12A0 to 0x12BF may be allocated as PID values for subtitle data to thus provide subtitles for, for example, 32 different languages.

Accordingly, in the example of FIG. 7, the subtitle data packet 710 and subtitle data packet 711 for the Korean language have the same PID value. If a user has set the Korean language, the controller 180 (see FIG. 1) may control the data processor 150 (see FIG. 1) to create subtitles using the packets of the subtitle data 710 and subtitle 711 having a PID value indicating the Korean language.

In detail, the controller 180 controls the data processor 150 to decode only the packets of the subtitle data 710 and the subtitle data 711 having a PID value for the Korean language set by a user, at their respective PTS times, and to display the subtitle data 710 and subtitle data 711 at their respective PTS times.

Since the Blu-ray disc can provide text subtitles for a plurality of different languages, there may be cases in which a user changes a language for subtitles while a movie is being played.

In this case, in the MPEG stream structure according to the exemplary embodiment, since subtitle data for each video data is buffered together with the video data by the data processor, subtitle data corresponding to the changed language is directly decoded with reference to the PID, and then displayed.

Accordingly, it is possible to overcome the problem caused in the conventional technique when a language for subtitles changes while a movie is being played. In the conventional technique, a video buffer is empty in some cases when the header of a player needs to move in order to read a text subtitle file for a newly set language from a Blu-ray disc and a screen is temporarily stopped to pre-load the text subtitle file.

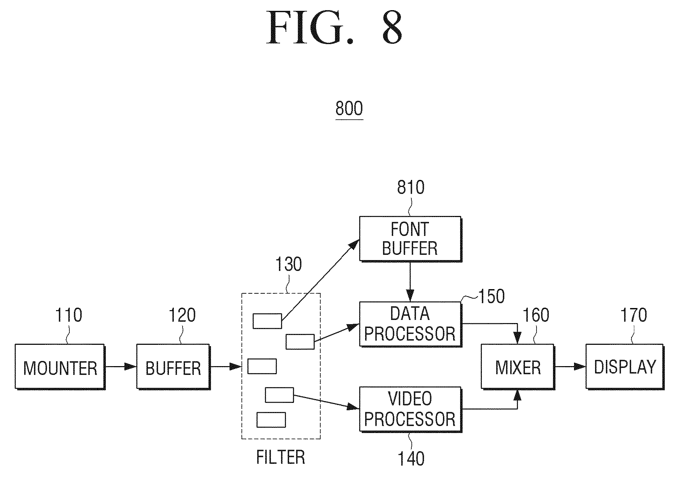

FIG. 8 is a block diagram showing the configuration of a Blu-ray disc player 800 including a font buffer 810, according to another exemplary embodiment.

Referring to FIG. 8, the Blu-ray disc player 800 includes the font buffer 810 in addition to the configuration of the Blu-ray disc player 100 shown in FIGS. 1 and 2. A controller (not shown) corresponding to the controller 180 of FIG. 1 controls the entire operation of the Blu-ray disc player 800.

Hereinafter, the operation of the Blu-ray disc player 800 will be described in detail with reference to FIG. 8.

If a Blu-ray disc is mounted on the mounter 110, the controller 180 loads a file recorded in the Blu-ray disc in the buffer 120. The file recorded in the Blu-ray disc may be a file in which a data field containing font data is additionally included in an MPEG stream file according to the exemplary embodiment.

Also, the controller 180 controls the Blu-ray disc player 800 so that the filter 130 detects video data and subtitle data, detects font data, and buffers the font data in the font buffer 810.

Successively, the controller 180 controls the Blu-ray disc player 800 such that the video processor 140 decodes the video data to create video frames, the data processor 150 decodes subtitle data with a font corresponding to the font data to create subtitles, and then the mixer 160 adds the subtitles to the video frames.

Also, the controller 180 controls the Blu-ray disc player 800 such that the subtitles transferred from the mixer 160 are displayed on the display 170, thereby playing data recorded in the Blu-ray disc on the display 170.

In order for the Blu-ray disc player 800 to create subtitles, font data has to be detected in advance before video data and subtitle data are played. For this, the font data may be aligned previously with respect to the alignment order of a file recorded in the Blu-ray disc. The font data may be detected earlier than video data and subtitle data before the video data and the subtitle data are played, for example, when an advertisement is played, and buffered in the font buffer 810.

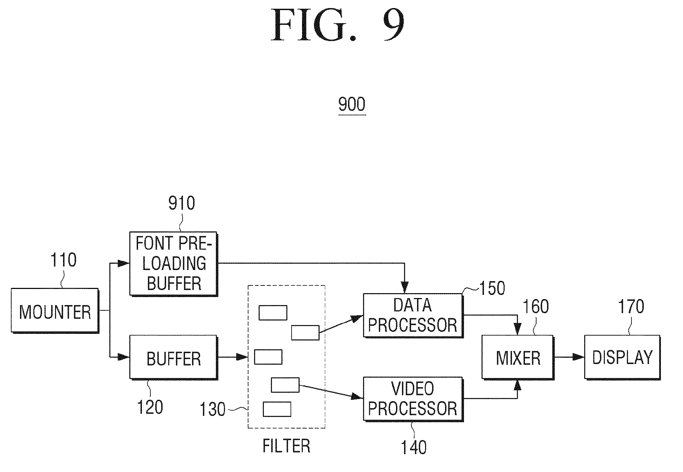

FIG. 9 is a block diagram showing the configuration of a Blu-ray disc player 900 according to another exemplary embodiment.

Referring to FIG. 9, the Blu-ray disc player 900 further includes a font pre-loading buffer 910 in addition to the configuration of the Blu-ray disc player 100 shown in FIGS. 1 and 2. A Blu-ray disc stores an MPEG stream file according to the exemplary embodiment and stores a separate font data file. Meanwhile, a controller (not shown) corresponding to the controller 180 of FIG. 1 controls the entire operation of the Blu-ray disc player 900, as in the exemplary embodiment of FIG. 2.

Hereinafter, the operation of the Blu-ray disc player 900 will be described in detail with reference to FIG. 9.

If a Blu-ray disc is mounted on the mounter 110, the controller 180 loads a file recorded in the Blu-ray disc in the buffer 120, and loads a font data file in the font pre-loading buffer 910.

Also, the controller 180 controls the Blu-ray disc player 900 such that the filter 130 detects video data and subtitle data from the file loaded in the buffer 120, and the controller 180 detects font data from the font data file loaded in the font pre-loading buffer 910, and outputs the font data to the data processor 150.

Successively, the controller 180 controls the Blu-ray disc player 900 such that the video processor 140 decodes the video data to create video frames, the data processor 150 decodes the subtitle data with a font corresponding to the font data to create subtitles, and then the mixer 160 adds the subtitles to the video frames.

Also, the controller 180 controls the Blu-ray disc player 900 such that the video frames to which the subtitles transferred from the mixer 160 have been added are displayed on the display 170, thereby playing data recorded in the Blu-ray disc on the display 170.

In order for the Blu-ray disc player 900 to create subtitles, the font data file has to be detected as font data in advance before video data and subtitle data are played. For this, the font data may be loaded and stored in the font pre-loading buffer 910 before video data and subtitle data are played.

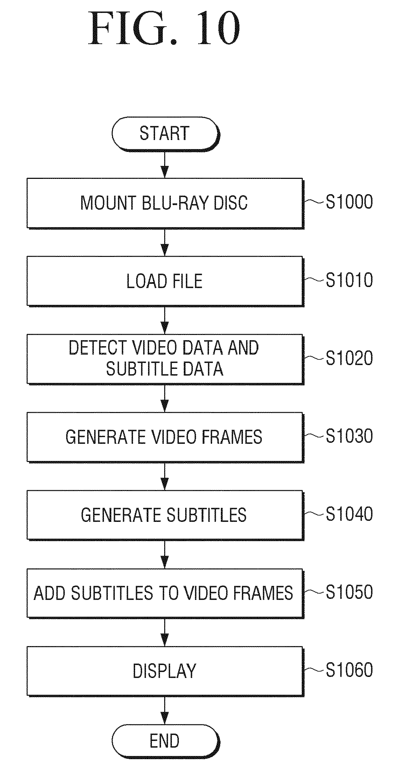

FIG. 10 is a flowchart showing a method of displaying subtitles in a Blu-ray disc player, according to an exemplary embodiment.

Referring to FIG. 10, according to the subtitle display method of the Blu-ray disc player, if a Blu-ray disc in which subtitle data and video data are each segmented into a plurality of fields and are recorded in the form of a file is mounted (S1000), a file recorded in the Blu-ray disc is loaded (S1010). Successively, video data and subtitle data are detected from the loaded file (S1020), the video data is decoded to create video frames (S1030), and the subtitle data is decoded to create subtitles (S1040). Then, the subtitles are added to the video frames (S1050), and the video frames to which the subtitles have been added are displayed (S1060).

Here, the subtitle data may include a subtitle style segment and a subtitle data segment. Also, the subtitle data is subtitle data for a plurality of different languages. I In operation S1040 when creating subtitles, the subtitles may be created using subtitle data corresponding to a language set by a user among the plurality of different languages for subtitles.

Also, an MPEG stream file according to the exemplary embodiment further includes a data field in which font data has been recorded. Operation S1020 of detecting video data and subtitle data further includes an operation of detecting font data. In operation S1040 of creating subtitles, the subtitles may be created with a font corresponding to the font data.

Also, an operation of storing a font data file separately from an MPEG stream file may be performed according to the exemplary embodiment. Loading the font data file includes loading the font data file in a font pre-loading buffer. Operation S1020 of detecting video data and subtitle data further includes detecting font data from the font data file. In operation S1040 of creating subtitles, the subtitles may be created with a font corresponding to the font data.

The video frames may be synchronized with the subtitles based on the time stamps of the video data and the time stamps of the subtitle data.

Also, the subtitle data and the video data may be recorded in units of packets with different PIDs. In operation S1020 of detecting video data and subtitle data, the video data and the subtitle data may be respectively detected based on the PID of each packet.

Here, the subtitle data is compressed text data. Operation S1040 of creating subtitles may further include an operation of decompressing the compressed text data.

A Blu-ray disc according to an exemplary embodiment may include a file storage area in which subtitle data and video data are each segmented into a plurality of fields and are recorded in the form of a file. The subtitle data is segmented according to a subtitle display. The video data is segmented in units of video frames for which a subtitle segmented according to the subtitle display is displayed in common. The subtitle data may include a subtitle style segment and a subtitle data segment.

Also, the file may further include a data field in which font data has been recorded, and the subtitle data may be compressed text data.

As described above, according to the various exemplary embodiments, it is possible to reduce a loading time due to unnecessary operation of a Blu-ray disc player, to reduce waste of resources, and to provide high-quality text subtitles using a small capacity. Meanwhile, the subtitle display method of the Blu-ray disc player, according to the exemplary embodiment, may be created as software and installed in the Blu-ray disc player.

In detail, according to an exemplary embodiment, a non-transitory computer readable medium that stores a program for performing an operation of loading a file stored in a Blu-ray disc in which subtitle data and video data are each separated into a plurality of fields and are recorded in the form of a file when the Blu-ray disc is mounted, an operation of detecting the video data and the subtitle data from the file stored in the Blu-ray disc, an operation of decoding the video data to create video frames, an operation of decoding the subtitle data to create subtitles, an operation of adding the subtitles to the video frames, and an operation of displaying the video frames to which the subtitles have been added may be installed in the Blu-ray disc player.

The non-transitory computer readable medium is not a medium that stores data temporarily, such as a register, a cache, a memory, etc., but a medium that stores data semi-permanently and allows a machine to read the data. In detail, various kinds of middleware or programs, as described above, may be stored in a non-transitory computer readable medium, such as a CD, a DVD, a hard disk, a Blu-ray disc, a USB, a memory card, a ROM, etc.

The foregoing exemplary embodiments and advantages are merely exemplary and are not to be construed as limiting the exemplary embodiments. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A Blu-ray disc player comprising:
a mounter;
a buffer configured to load a Blu-ray disc;
a controller configured to load a file recorded on the Blu-ray disc in the buffer if the Blu-ray disc is mounted on the mounter, and configured to load subtitle data and video data, wherein the subtitle data and the video data are separated into a plurality of fields and recorded in the file on the Blu-ray disc;
a filter configured to detect the video data and the subtitle data from the file loaded in the buffer;
a video processor configured to decode the video data and create one or more video frames;
a data processor configured to decode the subtitle data and create one or more subtitles;
a mixing unit configured to add the one or more subtitles to the one or more video frames; and
a display configured to display the one or more video frames to which the one or more subtitles have been added.

2. The Blu-ray disc player of claim 1, wherein the subtitle data includes a subtitle style segment and a subtitle data segment.

3. The Blu-ray disc player of claim 1 or 2, wherein the subtitle data is subtitle data for a plurality of different languages, and
the data processor creates the subtitles using subtitle data corresponding to a language set by a user among the plurality of different languages.

4. The Blu-ray disc player of any one of the preceding claims, further comprising a font buffer,
wherein the file recorded on the Blu-ray disc further includes a data field in which font data is recorded,
wherein the filter detects the font data from the file and buffers the font data in the font buffer, and
wherein the data processor creates the one or more subtitles with a font corresponding to the font data.

5. The Blu-ray disc player of any one of the preceding claims, further comprising a font pre-loading buffer,
wherein the Blu-ray disc stores a font data file separately from the file, wherein the controller loads the font data file in the font pre-loading buffer, detects font data from the font data file, and outputs the font data to the data processor, and
wherein the data processor creates the one or more subtitles with a font corresponding to the font data of the font data file.

6. The Blu-ray disc player of one of claims 1 through 5, wherein the controller controls the video processor and the data processor to create one or more video frames and one or more subtitles, and
wherein the one or more video frames and the one or more subtitles are synchronized with each other based on a time stamp of the video data and a time stamp of the subtitle data.

7. The Blu-ray disc player of one of claims 1 through 5, wherein the subtitle data and the video data are recorded in the file in units of packets and each of thee units of packets have different packet identifiers PIDs, and
the filter detects the video data and the subtitle data based on the PID of each packet in the file, and provides the video data and the subtitle data to the video processor and the data processor, respectively.

8. The Blu-ray disc player of claim 7, wherein the subtitle data is compressed text data, and
wherein the data processor decompresses the subtitle data to decode the subtitle data.

9. A method of displaying subtitles in a Blu-ray disc player, comprising:
loading a file recorded on a Blu-ray disc if the Blu-ray disc is mounted, and loading subtitle data and video data, wherein the subtitle data and the video data are separated into a plurality of fields and are recorded in the file on the Blu-ray disc;
detecting the video data and the subtitle data from the loaded file;
decoding the video data to create one or more video frames;
decoding the subtitle data to create one or more subtitles;
adding the one or more subtitles to the one or more video frames; and
displaying the one or more video frames to which the one or more subtitles have been added.

10. The method of claim 9, wherein the subtitle data includes a subtitle style segment and a subtitle data segment.

11. The method of claim 9 or 10, wherein the subtitle data is subtitle data for a plurality of different languages, and
wherein the creating the subtitles comprises creating the one or more subtitles using subtitle data corresponding to a language set by a user among the plurality of different languages.

12. The method of any one of claims 9 to 11, wherein the file further includes a data field in which font data is recorded,
wherein the detecting the video data and the subtitle data comprises detecting the font data from the file, and
wherein in the creating the subtitles, the subtitles are created with a font corresponding to the detected font data.

13. The method of any one of claims 9 to 12, wherein the Blu-ray disc stores a font data file separately from the file,
wherein the loading the file comprises loading the font data file in a font pre-loading buffer,
wherein the detecting the video data and the subtitle data comprises detecting font data from the font data file, and
wherein in the creating the subtitles, the subtitles are created with a font corresponding to the font data.

14. The method of one of claims 9 through 13, wherein the video frames and the subtitles are synchronized based on a time stamp of the video data and a time stamp of the subtitle data.

15. The method of one of claims 9 through 13, wherein the subtitle data and the video data are recorded in the file in units of packets and each of the units of packets have different packet identifiers PIDs, and
wherein in the detecting the video data and the subtitle data, the video data and the subtitle data are detected based on the PID of each packet.
